# EUROPEAN PATENT APPLICATION

(11) **EP 3 543 169 A1**
(43) Date of publication of application: **25.09.2019**
(21) Application number: 19161348.8
(22) Date of filing: 07.03.2019
(51) Int. Cl.: B65D 75/30, B65D 81/20, A23B 4/16, B65B 31/02, B65B 25/06

(54) **PACK CONTAINING A FOOD PRODUCT AND METHOD FOR PACKAGING FOOD PRODUCTS**

(30) Priority: 19.03.2018 IT 201800003747
(71) Applicant: G. Mondini SpA, 25033 Cologne Bresciano (BS) (IT)
(72) Inventor: Mondini, Giovanni, 25033 Cologne (Brescia) (IT)
(74) Representative: Ponchiroli, Simone

(57) **Abstract**

A pack comprising a supporting tray (3), a protective film (4) fixed to the supporting tray (3), and a food product (2) placed on the supporting tray (3) and covered by the protective film (4), wherein the supporting tray (3) is constituted of a flat sheet of multi-layer material and comprises at least one paper-based lower layer and one plastic material upper layer, wherein the protective film (4) is sealed to the upper layer of the flat sheet and together with it delimits an inner space (6) of the pack (1) in which the food product (2) is inserted, and wherein a protective atmosphere is present in the inner space (6).

## Description

This invention relates to a pack containing a food product and a method for packaging food products. In particular, this invention is preferably intended for the sector of packaging fresh and perishable food products such as meat, salami and cold cooked meats, etc.

As is known, in the food packaging sector widespread use is made of very many types of packs as well as various packaging methods.

In particular, in recent years ever increasing use has been made of vacuum packs and those in a protective atmosphere which, compared with packaging in air, guarantee improved and longer preservation of fresh food products.

A first particularly innovative technology for packaging food products, provided by the same Applicant and marketed under the Slimfresh® trademark comprises the combined use of a completely flat supporting tray and of the skin technology, in which a plastic film is applied using a vacuum to the product resting on the supporting tray and the film is made to adhere to the shape of the food product. The supporting tray is usually constituted of a multi-layer sheet comprising a paperboard main lower layer which gives the tray stiffness, combined with a plastic material upper layer (such as polypropylene or polyethylene) and if necessary a middle layer made of a material able to act as a barrier to oxygen.

That technology has proved particularly advantageous for packaging meat, but has also been successfully used for other applications.

Moreover, it has proved particularly advantageous since recycled paper can be used to make the paperboard layer. This, together with the fact that the tray can in turn easily be recycled, minimises the environmental impact of that packaging technology.

Despite all of the good points outlined above, the Slimfresh® system has proved non-optimal for some applications, in particular those relative to packaging delicate products such as sliced meats, salami and cold cooked meats or cheeses, for which the crushing caused by the film may ruin the slices inside the pack.

In contrast, for packaging of sliced meats, salami and cold cooked meats, cheeses or other foods which guarantees their optimum preservation, use is known of packs which comprise a thermoformed plastic tray equipped with a raised perimetric edge to which the sealing plastic film is fixed. The height of the perimetric edge is such that it prevents contact with the plastic film and there is a protective atmosphere present inside the pack.

However, even this solution is not without disadvantages, since it involves both considerable dimensions and the need to use plastic trays which require the use of a relatively large quantity of plastic.

In this context the technical purpose which forms the basis of this invention is to provide a pack containing a food product and a method for packaging food products which overcome the above-mentioned disadvantages.

In particular the technical purpose of this invention to provide a pack containing a food product and a method for packaging food products which allows optimum packaging of sliced meats, salami and cold cooked meats, cheeses or other foods which involve reduced use of material compared with the solutions currently adopted.

The technical purpose specified and the aims indicated are substantially achieved by a pack containing a food product, and a method for packaging food products, as described in the appended claims.

Further features and the advantages of this invention are more apparent in the detailed description, with reference to the accompanying drawings which illustrate several preferred, non-limiting embodiments of a pack containing a food product and a method for packaging food products, in which:
- Figure 1 is a schematic top view of a pack containing a food product which is made according to this invention;
- Figure 2 is an enlarged view of the detail II of Figure 1;
- Figure 3 is a vertical section of a detail of Figure 1 at the moment of completion of the packaging method according to this invention.

With reference to the above-mentioned figures the numeral 1 denotes in its entirety a pack containing a food product 2 according to this invention.

As shown in the accompanying figures and similarly to many prior art packs, the pack 1 comprises a supporting tray 3, a protective film 4 fixed to the supporting tray 3 (a non-heat shrink protective film 4), and a food product 2 placed on the supporting tray 3 and covered by the protective film 4. Although this technology may be used for various types of food products 2, it particularly advantageous when the food product 2 is constituted of meat, salami and cold cooked meats, cheeses or other foods in slices.

However, according to this invention, the supporting tray 3 is constituted of a flat sheet of multi-layer material and comprises at least one paper-based lower layer (usually made of paperboard) and one plastic material upper layer. Moreover, advantageously, the upper layer is constituted of polypropylene or polyethylene or another food-safe plastic material. Depending on requirements, the multi-layer sheet may also comprise a middle layer made of material suitable for constituting a barrier to oxygen, such as a layer of EVOH, or other middle layers. Moreover, depending on requirements, the paperboard layer may also be printed on one or both sides with information about the food product 2 or with simple promotional graphics.

Also according to this invention, the protective film 4 is sealed to the upper layer of the flat sheet at least along a frame 5 that surrounds the food product 2.

Depending on requirements, the protective film 4 may also be single-layer or multi-layer and may comprise, in addition to a layer of food-safe plastic material facing the food product 2, at least one layer of material suitable for constituting a barrier to oxygen (EVOH).

Furthermore, the supporting tray 3 and the protective film 4 delimit, in an oxygentight way, an inner space 6 of the pack 1 in which the food product 2 is inserted. According to one of the main aspects of this invention, in the inner space 6 there is a protective atmosphere, preferably a protective atmosphere at atmospheric pressure, although packaging may also be created with a pressure different to the atmospheric pressure.

As is usually the case in the packaging sector, in the context of this invention too the definition "protective atmosphere" means a mixture of gases containing less oxygen than atmospheric air or even no oxygen.

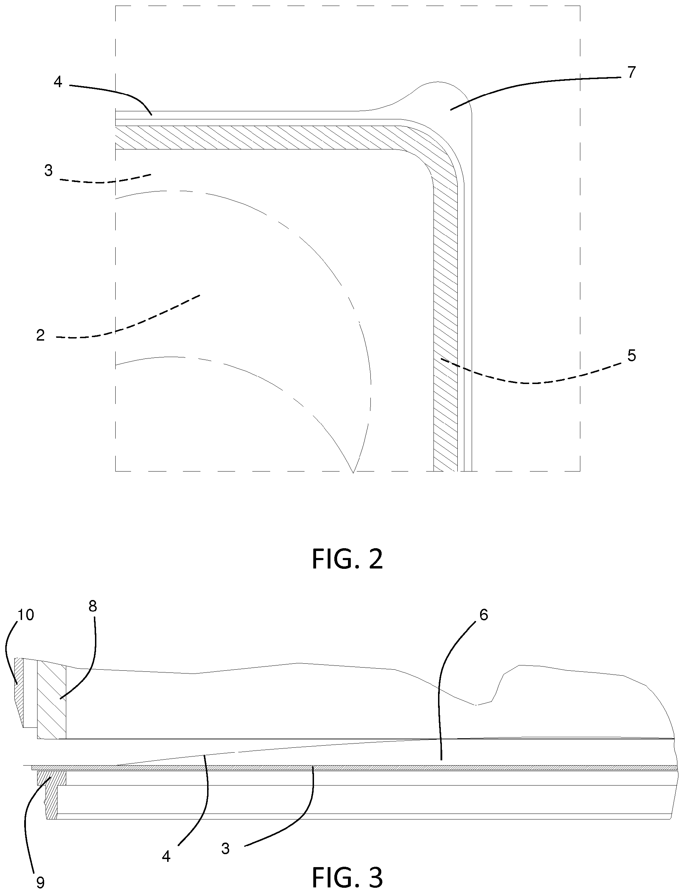

Therefore, in the pack 1 according to this invention, the protective film 4 may either be resting on the food product 2 or may have a dome shape relative to the flat supporting tray 3 (in other words, it may be more or less "inflated" - see Figure 3 where the product is not illustrated).

Finally, as shown in Figure 2, the protective film 4 may have at least one tab 7, projecting relative to the tray and suitable for being gripped by the fingers of the user in order to detach the film from the tray at the moment of opening the pack 1.

The pack 1 described up to now may advantageously be obtained with the method for packaging food products 2 according to this invention.

That method comprises first the operating step of taking a supporting tray 3 of the type described above, that is to say, in general, a supporting tray 3 constituted of a flat sheet of multi-layer material which in turn comprises at least one paper-based lower layer, one plastic material upper layer and, in case, one middle layer made suitable for constituting a barrier to oxygen.

Then the method comprises the operating steps of positioning a food product 2 on the upper layer of the supporting tray 3 and of positioning the protective film 4 over the food product 2 and the supporting tray 3 so as to cover them.

Before, during or after positioning the protective film 4, the method comprises the operating step of creating a protective atmosphere at the inner space 6 of the pack 1, that is to say, at the area between the protective film 4 and the supporting tray 3 (usually that can advantageously be achieved by working in a fluidtight chamber isolated from the outside and in which the protective atmosphere is created).

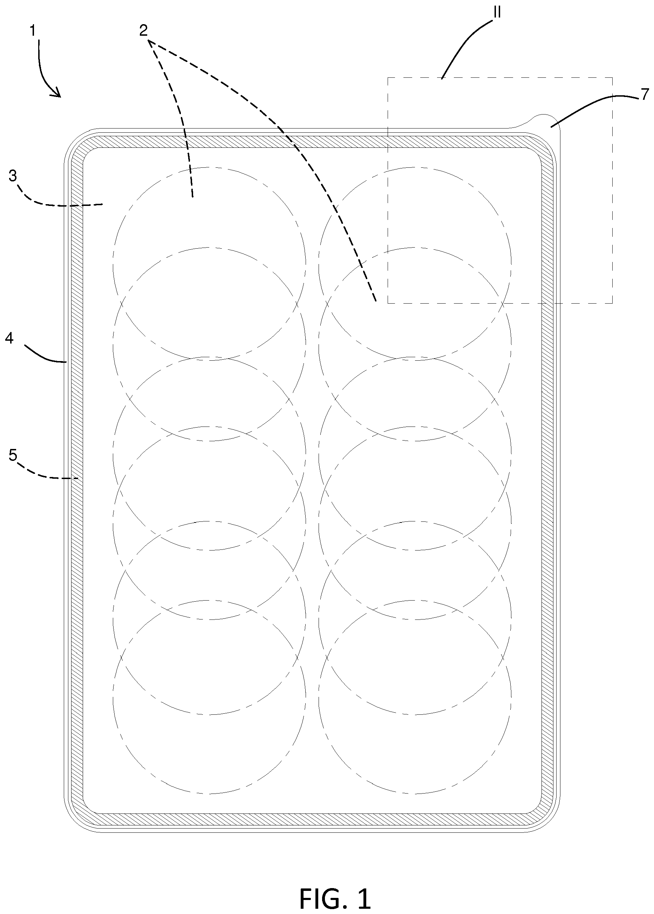

Whilst the protective atmosphere is maintained between the protective film 4 and the supporting tray 3, the method comprises sealing the protective film 4 to the upper layer of the supporting tray 3 at least along an annular frame 5 that completely surrounds the food product 2 (Figure 1).

As shown in Figure 3, in order to perform the sealing step it is possible to use a suitable apparatus which comprises two parts 8, 9 at least one of which is movable relative to the other between an apart position (Figure 3) and a clamping position in which in use they clamp the protective film 4 and the supporting tray 3 between them at the sealing frame 5 (at least one of the two parts 8, 9 is equipped with heating means which allow them to operate as a sealing unit for sealing the protective film 4 to the supporting tray 3).

Moreover, the protective film 4 may be obtained by cutting a larger sheet, advantageously a continuous sheet, by means of a shaped blade 10 joined to the apparatus and in turn movable between a projecting cutting position (not illustrated) and a withdrawn home position (Figure 3).

This invention brings important advantages.

In fact, thanks to this invention it has been possible provide a pack containing a food product and a method for packaging food products which allow optimum preservation even of sliced food products, such as meat, salami and cold cooked meats, cheeses or other foods.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A pack containing a food product comprising:
a supporting tray (3);
a protective film (4) fixed to the supporting tray (3); and
a food product (2) placed on the supporting tray (3) and covered by the protective film (4);
wherein the supporting tray (3) is constituted of a flat sheet of multi-layer material and comprises at least one paper-based lower layer and one plastic material upper layer, wherein the protective film (4) is sealed to the upper layer of the flat sheet, wherein the supporting tray (3) and the protective film (4) delimit, in an oxygentight way, an inner space (6) of the pack (1) in which the food product (2) is inserted, and wherein a protective atmosphere is present in the inner space (6).

2. The pack according to claim 1, wherein the pressure in the inner space (6) of the pack (1) is equal to an atmospheric pressure.

3. The pack according to claim 1, wherein the pressure in the inner space (6) of the pack (1) is greater than the standard atmospheric pressure.

4. The pack according to any of the preceding claims, wherein the upper layer is constituted of polypropylene or polyethylene, and wherein both the multi-layer sheet and the protective film (4) comprise at least one layer of material suitable for constituting a barrier to oxygen.

5. The pack according to any of the preceding claims, wherein the supporting tray (3) and the protective film (4) delimit the oxygentight inner space (6).

6. A method for packaging food products (2) comprising the operating steps of:
taking a supporting tray (3) constituted of a flat sheet of multi-layer material which in turn comprises at least one paper-based lower layer, one plastic material upper layer and, optionally, one middle layer suitable for constituting a barrier to oxygen;
positioning a food product (2) on the upper layer of the supporting tray (3);
positioning a protective film (4) over the food product (2) and the supporting tray (3);
creating a protective atmosphere at an inner space (6) located between the protective film (4) and the supporting tray (3); and
maintaining the protective atmosphere between the protective film (4) and the supporting tray (3), sealing the protective film (4) to the upper layer of the supporting tray (3) at least along an annular frame (5) that completely surrounds the food product (2).

7. The method according to claim 6 wherein, during the steps of creating a protective atmosphere and of sealing the protective film (4), an atmospheric pressure is maintained in the inner space (6).

8. The method according to claim 6 wherein, during the steps of creating a protective atmosphere and of sealing the protective film (4), a pressure greater than the standard atmospheric pressure is maintained in the inner space (6).
